# FASCICULE DE BREVET EUROPEEN

(11) **EP 0 771 965 B1**
(45) Date de publication et mention de la délivrance du brevet: **19.09.2001**
(21) Numéro de dépôt: 96402351.9
(22) Date de dépôt: 06.11.1996
(51) Int. Cl.: F16F 9/36

(54) **Dispositif d'obturation perfectionné pour tube d'amortisseur, en particulier d'amortisseur du type monotube pressurisé**
Verbesserte Abdichtungsvorrichtung für ein Rohr oder einen Schwingungsdämpfer, insbesondere einen unter Druck stehenden Einrohr-Schwingungsdämpfer
Improved sealing device for tube of a shock absorber, especially a pressurized monotube damper

(30) Priorité: 06.11.1995 FR 9513067
(43) Date de publication de la demande: 07.05.1997
(73) Titulaire: SOCIETE FRANCAISE DES AMORTISSEURS DE CARBON, F-27430 Saint Pierre du Vauvray (FR)
(72) Inventeur: Bataille, Alain, 75015 Paris (FR)
(74) Mandataire: Casalonga, Axel

(56) Documents cités:
- EP-A- 0 427 468
- EP-A- 0 535 409
- DE-A- 2 019 585
- FR-A- 2 398 935
- GB-A- 2 040 384
- US-A- 4 542 811

## Description

La présente invention concerne un dispositif d'obturation pour un tube d'amortisseur, en particulier un amortisseur hydraulique pressurisé, notamment de type monotube.

Les amortisseurs hydrauliques sont couramment utilisés pour équiper des véhicules, en particulier des véhicules automobiles. Un amortisseur hydraulique pressurisé comprend en général un piston apte à coulisser à l'intérieur d'un tube en définissant deux chambres de part et d'autre du piston et remplies d'un liquide d'amortissement, tel que de l'huile. Le piston présente un passage traversant qui met en communication les deux chambres en coopérant avec un clapet flottant, lequel régule l'ouverture du passage en fonction du sens d'écoulement du liquide dans le passage. Cet écoulement est provoqué par le mouvement axial du piston dans le tube lors du fonctionnement de l'amortisseur en phase d'extension ou de compression. le piston est habituellement fixé à une extrémité d'une tige dont le déplacement dans le tube est guidé axialement par un dispositif d'obturation monté à un partie d'extrémité du tube.

Les dispositifs d'obturation ont pour fonction d'une part d'obturer de façon étanche une partie d'extrémité du tube de l'amortisseur, et d'autre part de guider axialement le mouvement de la tige et donc du piston à l'intérieur du tube de l'amortisseur. Généralement, un dispositif d'obturation comprend un bouchon-guide, au moins un joint d'étanchéité, un élément de butée de détente et des moyens de fixation de l'ensemble dans le tube, le ou les joints d'étanchéité étant pris en sandwich entre le bouchon-guide et l'élément de butée de détente.

Comme son nom l'indique, le bouchon-guide assure le guidage axial de la tige du piston dans le tube de l'amortisseur. Le joint d'étanchéité assure aussi bien l'étanchéité entre le bouchon-guide et le tube, que l'étanchéité entre le bouchon-guide et la tige. Il en résulte que le bouchon-guide n'est pratiquement pas en contact avec le liquide de l'amortisseur. En conséquence, le guidage de la tige dans le bouchon-guide n'est pas lubrifié par l'huile de l'amortisseur.

Le jeu radial nécessaire entre la tige et la bouchon-guide, et l'absence de lubrification des surfaces de guidage provoquent des bruits dus au choc entre la tige et le bouchon-guide lors du fonctionnement de l'amortisseur. En effet, les contraintes soumises à l'amortisseur ne sont pas strictement axiales. Les composantes radiales de ces contraintes provoquent d'abord un choc mécanique entre la tige et le bouchon-guide, choc qui sera suivi de vibrations de la tige et causera un effet sonore de grésillement dû à l'interférence entre la tige et le bouchon-guide lorsque l'amplitude des vibrations de la tige est supérieure ou égale au jeu radial existant entre le tige et le bouchon-guide. Les bruits ainsi provoqués constituent une nuisance pour l'utilisateur.

Afin de remédier à ces inconvénients, il a été proposé, comme par exemple dans la demande de brevet français n° 94 04 026, de modifier complètement la structure du dispositif d'obturation de façon à obtenir une lubrification des surfaces de guidage de la tige.

Le document EP-A-0 427 468 décrit un ressort à gaz utilisable dans les presses et comportant un piston équipé d'une tige, et un écrou de fermeture pourvu d'un joint en U empêchant la pénétration d'agents contaminants dans l'espace entourant la tige.

L'invention vise à apporter une solution radicalement différente à ces problèmes, de façon à minimiser, voire réduire, les bruits et vibrations occasionnés par le déplacement de la tige, même pour des dispositifs d'obturation dont les surfaces de guidage ne sont pas lubrifiées.

Telle que revendiquée, l'invention propose donc un dispositif d'obturation pour tube d'amortisseur, en particulier un tube d'amortisseur hydraulique monotube pressurisé, comprenant une pièce d'extrémité (ou "bouchon" selon une dénomination habituellement utilisée par l'homme du métier) possédant un orifice d'extrémité pour le passage d'une tige; le dispositif d'obturation

comprend en outre un élément additionnel disposé autour dudit orifice d'extrémité. Cet élément additionnel comporte une armature fixée sur la face supérieure de la pièce d'extrémité, cette armature possédant un orifice d'armature dont le diamètre est supérieur au diamètre de l'orifice d'extrémité. L'élément additionnel comporte en outre un unique élément résilient annulaire. Selon une caractéristique générale de l'invention, l'élément résilient annulaire possède une première partie de sa surface externe reposant librement (c'est-à-dire sans adhésion ni fixation quelconque) sur la face supérieure de la pièce d'extrémité, et une deuxième partie de sa surface externe adhérée sur l'armature. Le diamètre interne de l'élément résilient est, à l'état libre (c'est-à-dire lorsqu'il n'est pas en contact avec la tige de l'amortisseur) inférieur au diamètre dudit orifice d'extrémité, de façon à obtenir, en présence de la tige, une compression radiale de l'élément résilient au niveau de la tige.

Cet élément additionnel se comporte comme un élément anti-bruit et permet de réduire les oscillations et vibrations de la tige lors du mouvement de cette dernière, tout en n'entravant pas ce mouvement. Ce résultat est notamment obtenu par la combinaison de portions libres et adhérées de l'élément résilient, et d'une fixation de l'armature sur le bouchon.

Par ailleurs, le fait que l'élément annulaire résilient soit adhéré sur l'armature, c'est-à-dire intimement lié à celle-ci au niveau moléculaire, par exemple par vulcanisation, évite tout risque d'extrusion de l'élément annulaire résilient entre l'armature et la tige lors du mouvement de cette dernière.

L'élément résilient possède avantageusement un renflement débordant radialement de l'armature, et définissant ledit diamètre interne de cet élément résilient. Ce renflement permet d'obtenir un effort radial important lors de la compression de cet élément résilient, de façon à freiner les oscillations de la tige, mais contribue dans le même temps à obtenir un effort axial minime de façon à ne pas perturber le mouvement de va-et-vient de la tige.

Par ailleurs, il est particulièrement avantageux que la première partie de la surface externe de l'élément résilient, c'est-à-dire la partie de la surface reposant librement sur la surface supérieure du bouchon, comporte une gorge annulaire. Ceci permet d'obtenir une homogénéité des contraintes appliquées sur la tige.

Selon un mode de réalisation de l'invention, l'armature comporte une première partie annulaire radiale prolongée sensiblement d'équerre par une deuxième partie cylindrique. L'élément résilient est alors de préférence adhéré sur lesdites première et deuxième parties de l'armature. En d'autres termes, avec cette configuration, l'élément résilient présente deux surfaces libres et deux surfaces adhérées sur l'armature, ce qui augmente sa rigidité, diminue encore le risque d'extrusion, et nécessite donc, pour un comportement analogue, une quantité moindre de matériau résilient.

L'armature est fixée sur la face supérieure de la pièce d'extrémité, avantageusement par l'intermédiaire de la deuxième partie.

Néanmoins, en variante, l'armature peut comporter une branche de révolution comportant outre ladite deuxième partie cylindrique, une troisième partie prolongeant cette deuxième partie cylindrique et fixée sur la face supérieure de la pièce d'extrémité.

Selon un mode de réalisation de l'invention, la face supérieure de la pièce d'extrémité, c'est-à-dire la face supérieure du bouchon, comporte une gorge annulaire dans laquelle l'armature est fixée par un emmanchement à force.

Par ailleurs, l'élément additionnel est de préférence monobloc venu de moulage. Ce caractère monobloc de l'élément additionnel facilite ainsi son montage sur le dispositif d'obturation, notamment lorsque ce montage consiste en un emmanchement à force.

D'une façon générale, l'élément additionnel est configuré de façon à ce que l'élément additionnel résilient génère sur le diamètre extérieur de la tige une contrainte radiale de 2 à 8 MPa, avantageusement autour de 6 MPa en contrainte maximum, et ce sur une hauteur utile (épaisseur axiale) de l'ordre de 1,5 à 3 mm, avantageusement autour de 2 à 2,5 mm.

Ces caractéristiques peuvent être atteintes par exemple au moyen d'un élément additionnel dont le matériau résilient a une dureté Shore A comprise entre environ 60 et environ 80 et dont la largeur radiale, à l'état libre, est comprise entre environ 2 mm et environ 4 mm, tandis que l'épaisseur axiale utile est comprise, à l'état libre, entre environ 2 mm et environ 5 mm.

L'invention a également pour objet un élément additionnel pour dispositif d'obturation de tube d'amortisseur, tel que défini ci-avant.

D'autres avantages et caractéristiques de l'invention apparaîtront à l'examen de la description détaillée de modes de réalisation, nullement limitatifs, et des dessins annexés sur lesquels :
- la figure 1 est une coupe longitudinale schématique d'un tube d'amortisseur hydraulique pressurisé du type monotube, comportant un dispositif d'obturation de l'art antérieur,
- la figure 2 illustre un élément additionnel selon l'invention,
- la figure 3 illustre un dispositif d'obturation selon l'invention comportant un bouchon équipé de l'élément additionnel de la figure 2, et
- les figures 4 et 5 illustrent deux autres variantes de réalisation d'élément additionnel et de dispositif d'obturation selon l'invention.

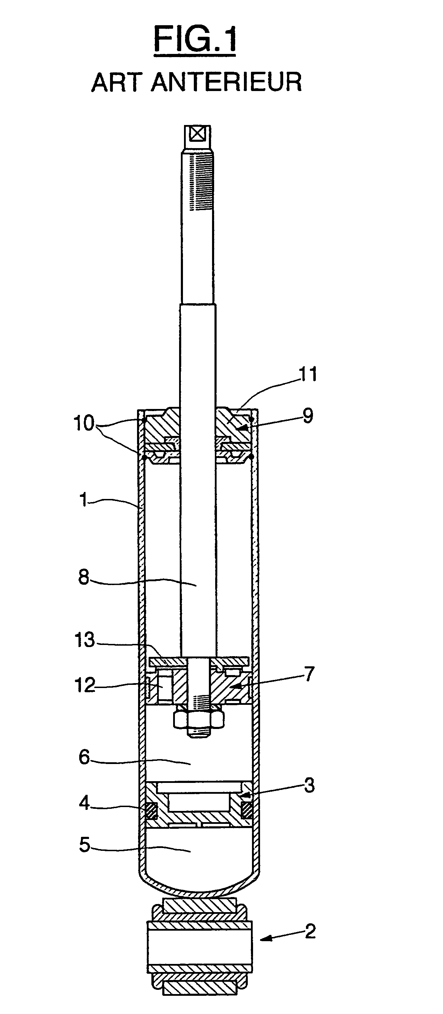

Tel qu'illustré sur la figure 1, l'amortisseur hydraulique pressurisé monotube comprend un tube 1 fixé à son extrémité inférieure par un oeillet 2. Un piston séparateur gaz/liquide 3, monté libre à coulissement dans la partie inférieure du tube 1, est muni d'un joint torique d'étanchéité 4 et sépare le tube en deux compartiments fermés. Le compartiment inférieur 5 contient un gaz sous pression et le compartiment supérieur 6 est rempli d'un liquide d'amortissement qui est en général une huile incompressible. Un second piston 7 est fixé à l'extrémité inférieure d'une tige 8 dont le déplacement dans le tube est guidé par un dispositif d'obturation 9 fixé à la partie supérieure du tube 1. Pour assurer le fonctionnement de l'amortisseur, le piston 7 présente des passages permanents 12 pour l'huile de l'amortisseur. Les passages 12 coopèrent avec un clapet flottant 13 pour définir de part et d'autre du piston 7 deux chambres hydrauliquement actives.

Le dispositif d'obturation 9, dans sa conception classique, comprend un joint d'étanchéité, un élément de butée de détente réalisé à partir d'un flasque métallique et un bouchon-guide 11 contre la face interne duquel est appliqué le joint d'étanchéité plaqué par la pression d'huile et maintenu en place par l'élément de butée et de détente. L'ensemble est fixé à l'intérieur du tube 1, à sa partie supérieure, par deux circlips 10. Le guidage axial de la tige 8 du piston 7 est réalisé à l'aide du bouchon 11, ou pièce d'extrémité, qui comporte un orifice d'extrémité pour le passage de la tige.

Lorsque l'amortisseur subit des contraintes non strictement axiales, il se produit un choc entre le bouchon 11 et la tige 8 en flexion, ce qui cause des bruits et des vibrations, source de gêne pour le conducteur du véhicule équipé d'un tel amortisseur.

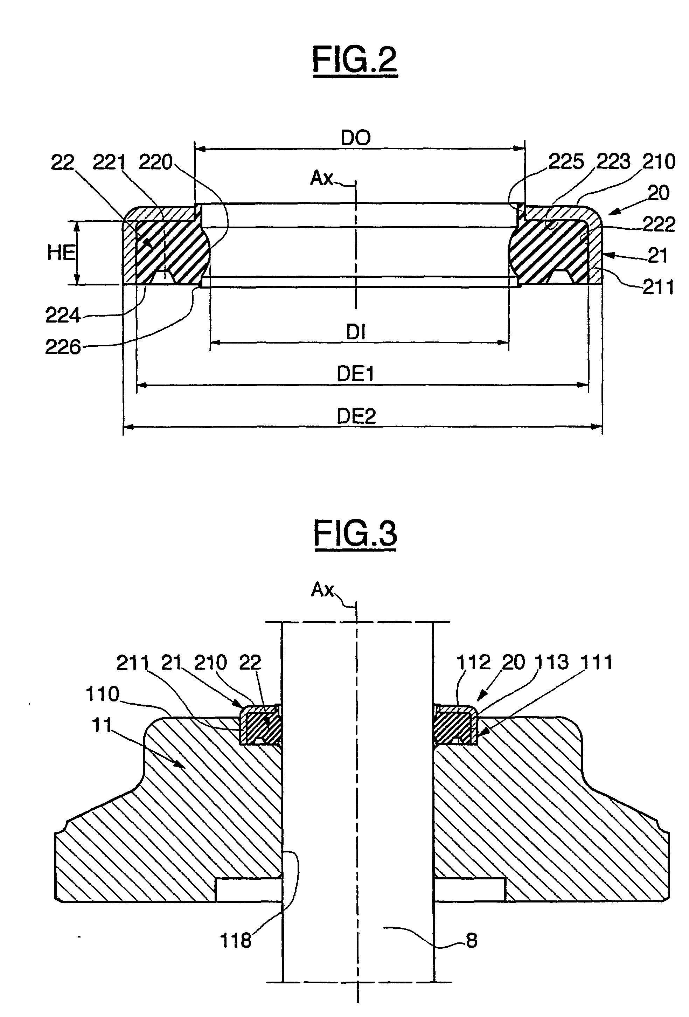

L'invention remédie à ces inconvénients à partir d'un élément additionnel anti-bruit 20 tel qu'illustré sur la figure 2, fixé sur la face supérieure du bouchon 11, comme illustré sur la figure 3.

Dans l'exemple de réalisation illustré ici, l'élément additionnel 20 comporte une armature, par exemple métallique, composée d'une première partie annulaire radiale 210 prolongée d'équerre par une deuxième partie cylindrique 211.

Le diamètre interne DO de la première partie radiale définit le diamètre d'un orifice d'armature et est supérieur au diamètre de l'orifice d'extrémité 118 du bouchon 11 (figure 3). Il est par conséquent supérieur au diamètre de la tige 8.

Le diamètre externe DE2 de la branche cylindrique 211 est légèrement supérieur au diamètre interne d'une gorge annulaire 111 ménagée dans la face supérieure 110 du bouchon 11. Ainsi, l'élément additionnel 20 peut être emmanché à force dans la gorge 111, la face périphérique externe de la branche 211 de l'armature 21 venant en contact avec la face cylindrique périphérique 113 de la gorge 111.

Un autre constituant essentiel de cet élément additionnel 20 réside dans un élément annulaire résilient 22, ici en caoutchouc, adhéré, par vulcanisation, sur les faces interne 222 et 223 des deuxième 211 et première 210 parties de l'armature 21, respectivement.

L'élément annulaire résilient 22 possède, sur sa face périphérique interne, un renflement 220 définissant un orifice dont le diamètre DI est inférieur au diamètre de l'orifice d'extrémité 118 du bouchon, et donc au diamètre de la tige 8. Ainsi, lorsque l'élément additionnel 20 est disposé dans la gorge 211 autour de la tige 8, il y a compression radiale de l'élément résilient 22, comme illustré sur la figure 3. Ce renflement 220 permet d'obtenir un effort radial important sur la tige de façon à freiner les oscillations de cette dernière, tout en exerçant un effort axial minime sur cette dernière pour ne pas gêner son mouvement.

La face inférieure 224 de cet élément résilient 22, qui repose librement sur la face inférieure 112 de la gorge 111 du bouchon, comporte de préférence une gorge annulaire 221 permettant l'obtention d'une homogénéité des contraintes appliquées sur la tige.

L'élément additionnel est avantageusement venu de moulage, l'adhérence par vulcanisation s'effectuant dans le moule. De ce fait, cet élément résilient 22 comporte deux échappements de matière 225 et 226.

D'une façon générale, à l'état libre, c'est-à-dire lorsqu'il n'est pas monté autour de la tige 8, la largeur radiale de l'élément résilient 22, c'est-à-dire la distance DE1-DI (figure 2) est comprise entre environ 2 mm et environ 4 mm. Par ailleurs, l'épaisseur axiale utile, ou hauteur utile HE, c'est-à-dire la distance séparant la face inférieure 224 de la face interne de la branche radiale 210 de l'armature, est comprise entre environ 2 mm et environ 5 mm. La dureté Shore A du matériau résilient, par exemple du caoutchouc; est comprise entre environ 60 et environ 80, typiquement de l'ordre de 70.

Ainsi, pour une tige de piston de diamètre 11,5 mm, le diamètre DI est de l'ordre 10,8 mm, tandis que le diamètre DE1 est de l'ordre de 16,9 mm. Le diamètre DO est de l'ordre quant à lui de 12,6 mm. La hauteur utile HE est de l'ordre de 2,4 mm et la gorge annulaire 221, s'étendant entre environ 6,9 mm et environ 7,9 mm de l'axe longitudinal Ax, a une profondeur axiale de l'ordre de 0,5 mm.

On obtient alors, pour une telle configuration, une contrainte radiale globale exercée sur la tige de l'ordre de 7 à 10 MPa.

Bien qu'il soit possible de prévoir une armature 21 se limitant à une rondelle 210 sur la face inférieure de laquelle serait adhéré l'élément résilient, emmanchée à force dans une gorge du bouchon dont le diamètre serait légèrement inférieur au diamètre externe de la rondelle, l'adhérence de l'élément résilient sur deux faces permet de rigidifier l'ensemble.

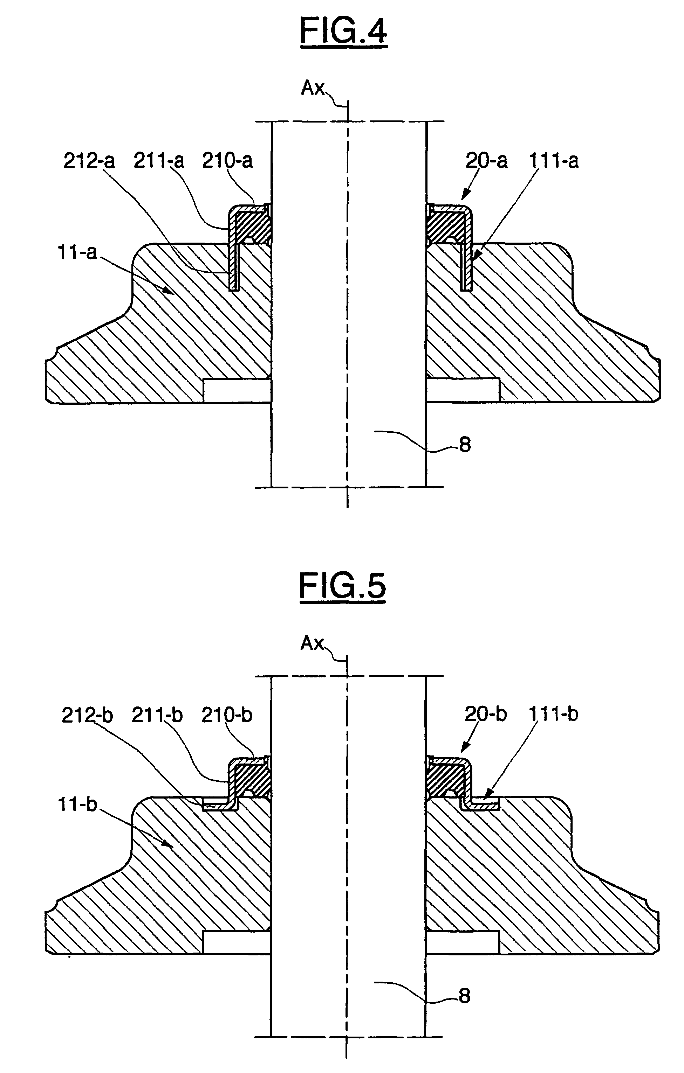

Ceci étant, il est possible de prévoir, comme illustré sur la figure 4, un élément additionnel 20-a dont l'armature, outre la première partie annulaire radiale 210-a, possède une branche cylindrique incorporant la deuxième partie cylindrique 211-a sur la face interne de laquelle est adhéré l'élément résilient. Cette deuxième partie est prolongée par une troisième partie 212-a, coaxiale avec la deuxième partie 211-a. Dans ce cas, l'élément additionnel 20-a est fixé sur le bouchon 11-a par un emmanchement à force de la troisième partie 212-a dans une gorge annulaire 111-a du bouchon.

Il est également possible, comme illustré sur la figure 5, de prévoir que la troisième partie 212-b de l'armature de l'élément additionnel 20-b prolonge sensiblement d'équerre et vers l'extérieur, la deuxième partie 211-b. Cette troisième partie 211-b, annulaire et radiale, est alors emmanchée à force dans une gorge 111-b du bouchon 11-b dont le diamètre externe est légèrement inférieur au diamètre périphérique de la troisième partie 212-b.

Ces modes de réalisation, et d'autres modes, prévoyant un emmanchement à force ainsi qu'une fabrication par moulage permettent d'obtenir un moindre coût de production. De plus, l'emmanchement à force de l'élément additionnel sur le bouchon par le dessus, permet la réalisation antérieure du bouchon par moulage sans nécessiter d'usinage ultérieur pour permettre la réalisation d'un logement destiné à recevoir l'élément additionnel.

## Revendications

1. Dispositif d'obturation pour tube d'amortisseur, en particulier un tube d'amortisseur hydraulique monotube pressurisé, comprenant une pièce d'extrémité (11) possédant un orifice d'extrémité (118) pour le passage d'une tige (8), un élément additionnel (20) disposé autour dudit orifice d'extrémité (118) et comportant une armature (21) fixée sur la face supérieure (110) de la pièce d'extrémité et possédant un orifice d'armature d'un diamètre supérieur (Do) au diamètre de l'orifice d'extrémité (118), ainsi qu'un unique élément résilient annulaire (22), **caractérisé par** le fait que l'élément résilient annulaire possède une première partie (224) de sa surface externe reposant librement sur la face supérieure (110) de la pièce d'extrémité, une deuxième partie (222, 223) de sa surface externe adhérée sur l'armature, le diamètre interne (DI) de l'élément résilient étant, à l'état libre, inférieur au diamètre dudit orifice d'extrémité (118), de façon à obtenir, en présence de la tige, une compression radiale de l'élément résilient au niveau de la tige.

2. Dispositif selon la revendication 1, **caractérisé par** le fait que l'élément résilient (22) possède un renflement (220) débordant radialement de l'armature, et définissant ledit diamètre interne (DI) de cet élément résilient.

3. Dispositif selon la revendication 1 ou 2, **caractérisé par** le fait que ladite première partie (224) de la surface externe de l'élément résilient comporte une gorge annulaire (221).

4. Dispositif selon l'une des revendications précédentes, **caractérisé par** le fait que l'armature (21) comporte une première partie annulaire (210) radiale prolongée sensiblement d'équerre par une deuxième partie cylindrique (211), et par le fait que l'élément résilient est adhéré sur lesdites première et deuxième parties de l'armature.

5. Dispositif selon la revendication 4, **caractérisé par** le fait que l'armature (21) est fixée sur la face supérieure de la pièce d'extrémité par l'intermédiaire de la deuxième partie (211).

6. Dispositif selon la revendication 4, **caractérisé par** le fait que l'armature comporte une branche de révolution (211-a, 212-a; 211b, 212-b) comportant ladite deuxième partie cylindrique (211-a; 211-b) et une troisième partie (212-a; 212-b) prolongeant ladite deuxième partie cylindrique et fixée sur la face supérieure de ladite pièce d'extrémité.

7. Dispositif selon l'une des revendications précédentes, **caractérisé par** le fait que la face supérieure de la pièce d'extrémité comporte une gorge annulaire (111) dans laquelle l'armature est fixée emmanchée à force.

8. Dispositif selon l'une des revendications précédentes, **caractérisé par** le fait que l'élément additionnel (20) est monobloc venu de moulage.

9. Dispositif selon l'une des revendications précédentes, **caractérisé par** le fait que le matériau résilient formant ledit élément résilient (22) a une dureté Shore A comprise entre environ 60 et environ 80, et par le fait qu'à l'état libre, la largeur radiale de l'élément résilient est comprise entre environ 2 mm et environ 4 mm, et l'épaisseur axiale utile est comprise entre environ 2 mm et environ 5 mm.

10. Elément additionnel pour dispositif d'obturation de tube d'amortisseur, en particulier d'amortisseur hydraulique monotube pressurisé, tel que défini dans l'une des revendications 1 à 9.

## Claims

1. Closure device for shock-absorber tube, in particular for a tube of a pressurised single tube hydraulic shock-absorber, comprising an end piece (11) having an end orifice (118) for the passage of a rod (8), an additional element (20) arranged around the said end orifice (118) and including a support (21) fixed to the upper face (110) of the end piece and having a support orifice of a diameter (Do) greater than the diameter of the end orifice (118), and a single annular resilient element (22), **characterised by** the fact that the resilient annular element has a first part (224) of its outer surface resting freely on the upper face (110) of the end piece, a second part (222, 223) of its external surface adhered to the support, the internal diameter (DI) of the resilient element being, in the free state, less than the diameter of the said end orifice (118), so as to obtain, in the presence of the rod, a radial compression of the resilient element at the level of the rod.

2. Device as described in claim 1, **characterised by** the fact that the resilient element (22) has a bulge (220) overlapping the support radially, and defining the said internal diameter (DI) of this resilient element.

3. Device as described in claim 1 or 2, **characterised by** the fact that the said first part (224) of the external surface of the resilient element includes an annular groove (221).

4. Device as described in one of the preceding claims, **characterised by** the fact that the support (21) includes a first radial annular part (210) extended substantially at right angles by a second cylindrical part (211), and by the fact that the resilient element is adhered to the said first and second parts of the support.

5. Device as described in claim 4, **characterised by** the fact that the support (21) is fixed to the upper face of the end piece by means of the second part (211).

6. Device as described in claim 4, **characterised by** the fact that the support includes a part of revolution (211-a, 212-a; 211-b, 212-b) including the said second cylindrical part (211-a; 211-b) and a third part (212-a; 212-0b) extending the said second cylindrical part and fixed to the upper face of the said end piece.

7. Device as described in one of the preceding claims, **characterised by** the fact that the upper face of the end piece includes an annular groove (111) in which the support is force fitted.

8. Device as described in one of the preceding claims, **characterised by** the fact that the additional element (20) is moulded in one piece.

9. Device as described in one of the preceding claims, **characterised by** the fact that the resilient material forming the said resilient element (22) has a Shore A hardness between approximately 60 and approximately 80, and by the fact that in the free state, the radial width of the resilient element is between approximately 2 mm and approximately 4 mm, and the useful axial thickness is between approximately 2 mm and approximately 5 mm.

10. Additional element for closure device for shock-absorber tube, particularly for a pressurised single tube hydraulic shock-absorber, as defined in one of claims 1 to 9.

## Patentansprüche

1. Verschlußvorrichtung für ein Stoßdämpferrohr, insbesondere für ein hydraulisches Stoßdämpferrohr mit druckbeaufschlagtem Einzelrohr, mit einem Endstück (11), das eine Endöffnung (118) für den Durchgang einer Stange (8) aufweist, einem um die Endöffnung (118) angeordneten Zusatzelement (20), das eine an der oberen Oberfläche (110) des Endstücks befestigte Armatur (21) aufweist, die eine Armaturöffnung mit einem größeren Durchmesser (Do) als dem Durchmesser der Endöffnung (118) hat, sowie mit einem einzelnen ringförmigen elastischen bzw. Federelement (22),
**dadurch gekennzeichnet, daß** das ringförmige Federelement einen ersten, frei auf der oberen Oberfläche des Endstücks aufliegenden Abschnitt (224) seiner Außenfläche und einen zweiten, an der Armatur anhaftenden Abschnitt (222,223) seiner Außenfläche besitzt, wobei der Innendurchmesser (DI) des Federelements im freien Zustand kleiner ist als der Durchmesser der Endöffnung (118), so daß bei vorhandener Stange eine radiale Komprimierung des Federelements plangleich mit der Stange erzielt wird.

2. Vorrichtung nach Anspruch 1, **dadurch gekennzeichnet, daß** das Federelement (22) eine Verdickung bzw. einen Wulst (220) aufweist, der radial von der Armatur vorsteht und den Innendurchmesser (DI) dieses Federelements festlegt.

3. Vorrichtung nach Anspruch 1 oder 2, **dadurch gekennzeichnet, daß** der erste Abschnitt (224) der Außenfläche des Federelements eine Ringnut (221) aufweist.

4. Vorrichtung nach einem der vorangehenden Ansprüche, **dadurch gekennzeichnet, daß** die Armatur (21) einen ersten radialen ringförmigen Abschnitt (210) aufweist, der im wesentlichen im rechten Winkel um einen zweiten zylindrischen Abschnitt (211) verlängert ist, und daß das Federelement an dem ersten und zweiten Abschnitt der Armatur anhaftet.

5. Vorrichtung nach Anspruch 4, **dadurch gekennzeichnet, daß** die Armatur (21) mittels des zweiten Abschnitts (211) an der oberen Oberfläche des Endstücks befestigt ist.

6. Vorrichtung nach Anspruch 4, **dadurch gekennzeichnet, daß** die Armatur ein Drehteil (211-a,212-a;211b,212b) aufweist, das einen zweiten zylindrischen Abschnitt (211-a;211-b) und einen dritten Abschnitt (212-a;212-b), der den zweiten zylindrischen Abschnitt verlängert und an der oberen Oberfläche des Endstücks befestigt ist, umfaßt.

7. Vorrichtung nach einem der vorangehenden Ansprüche, **dadurch gekennzeichnet, daß** die obere Oberfläche des Endstücks eine Ringnut (111) umfaßt, in der die Armatur im Preßsitz befestigt ist.

8. Vorrichtung nach einem der vorangehenden Ansprüche, **dadurch gekennzeichnet, daß** das Zusatzelement (20) einstückig geformt ist.

9. Vorrichtung nach einem der vorangehenden Ansprüche, **dadurch gekennzeichnet, daß** das das Federlement (22) bildende federnde Material eine Shore-A-Härte aufweist, die zwischen ca. 60 und 80 liegt, und daß im freien Zustand die radiale Breite des Federelements zwischen ca 2mm und ca. 4mm und die axiale Nutzdicke zwischen ca. 2mm und ca. 5mm liegt.

10. Zusatzelement für eine Verschlußvorrichtung eines Stoßdämpferrohrs, insbesondere eines hydraulischen Stoßdämpfers mit druckbeaufschlagtem Einzelrohr, wie er in einem der Ansprüche 1 bis 9 definiert ist.
